Europäisches Patentamt

European Patent Office

Office européen des brevets

(19)

(11) Veröffentlichungsnummer : **0 213 109 B1**

# (12) EUROPÄISCHE PATENTSCHRIFT

(45) Veröffentlichungstag der Patentschrift :
**17.04.91 Patentblatt 91/16**

(51) Int. Cl.$^5$ : **B29C 67/14, F16F 1/36**

(21) Anmeldenummer : **86890200.8**

(22) Anmeldetag : **07.07.86**

(54) **Federblatt und Verfahren zur Herstellung desselben.**

(30) Priorität : **03.08.85 DE 3527917**

(43) Veröffentlichungstag der Anmeldung :
**04.03.87 Patentblatt 87/10**

(45) Bekanntmachung des Hinweises auf die
Patenterteilung :
**17.04.91 Patentblatt 91/16**

(84) Benannte Vertragsstaaten :
**AT CH DE FR GB IT LI NL SE**

(56) Entgegenhaltungen :
**EP-A- 0 040 531**
**EP-A- 0 084 101**
**WO-A-84/01413**
**GB-A- 2 125 929**
**PATENT ABSTRACTS OF JAPAN, Band 3, Nr.**
**45 (M-56), 17. April 1979, Seite 23 M 56; &**
**JP-A-54 22 048 (TORAY K.K.) 19-02-1979**
**Idem**
**PATENT ABSTRACTS OF JAPAN, Band 7, Nr.**
**25 (M-190)[1170], 2. Februar 1983; & JP-A-57**
**179 439 (HORIKIRI BANE SEISAKUSHO K.K.)**
**05-11-1982**

(73) Patentinhaber : **BÖHLER**
**AKTIENGESELLSCHAFT**
**Hansaallee 321**
**W-4000 Düsseldorf 11 (DE)**

(72) Erfinder : **Puck, Alfred, Prof. Dr.-Ing.**
**Am Ahlberg 33**
**W-3524 Immenhausen-Mariendorf (DE)**
Erfinder : **Jakobi, Reinhard, Dipl.-Ing.**
**Am Auekamp 34**
**W-3500 Kassel (DE)**
Erfinder : **Kampke, Manfred, Dipl.-Ing.**
**Im Wiesengrund 12**
**W-3500 Kassel (DE)**
Erfinder : **Schürmann, Helmut, Dipl.-Ing.**
**Burgunderstrasse 13**
**W-6701 Maxdorf (DE)**
Erfinder : **Götte, Timo, Dipl.-Ing.**
**Elfbuchenstrasse 22**
**W-3500 Kassel (DE)**

**Beschreibung**

Die Erfindung betrifft ein Federblatt gemäß dem Oberbegriff des Anspruchs 1 sowie ein Verfahren zur Herstellung einer blattfeder gemäß dem Oberbegriff des Anspruchs 9.

Blattfedern unterliegen während ihrer Biegebeanspruchung daraus resultierenden Druck- als auch Zugspannungen. Je nach Einsatz der Federn wechseln in kurzer oder längerer Zeit die auf die Feder einwirkenden Kräfte, womit die Biegebeanspruchungen sich in der Feder ändern. Bei Blattfedern zur Verbindung z.B. einer Achse mit einem Kraftfahrzeug, ändern sich die Belastungen und damit die Zug- und Druckspannungen innerhalb der Federblätter in sehr kurzen Zeitspannen.

Für Blattfedern sind eine hohe Anzahl von Materialien bekannt, wobei diese Materialien, sei es Holz, Kunststoff, faserverstärkter kunststoff, Stahl und dgl., keine isotropen Eigenschaften aufweisen, sondern anisotrope Eigenschaften besitzen, welche auch zur günstigeren Materialausnützung herangezogen werden können. Je anisotroper ein Körper ist, Desto mehr muß bei der Konstruktion einer Blattfeder auf seine Beschaffenheit Rücksicht genommen werden. Bei Blattfedern, die mit faserverstärktem Kunststoff, z.B. mit Glas-, Konlenstoff-, Aramidfasern aufgebaut sind, wobei diese Fasern unidirektional d.h. im wesentlichen in Blattfederlängsrichtung und im wesentlichen über die gesamte Länge des Federblattes sich erstreckend angeordnet sind, muß den unterschiedlichen Materialeigenschaften und zwar des Kunststoffes, welcher die Fasern verbindet, und der Faser selbst besonders hohes Augenmerk geschenkt werden. Der Kunststoff weist in der Regel eine relativ geringe Zugfestigkeit jedoch eine höhere Druckfestigkeit auf wohingegen die Fasern sowohl eine deutlich höhere Zug- als auch Druckfestigkeit aufweisen können. Dementsprechend muß bei dem Aufbau einer Blattfeder, insbesondere Parabelfeder, auf dieses Eigentumspektrum besonders Rücksicht genommen werden. So ist es bereits bekannt geworden, bei einem faserverstärkten Bauelement die Fasern als solche während des Erhärtens des Kunststoffes unter Zugspannung zu halten, sodaß auf dem Kunststoff, und zwar in Faserlängsrichtung von den einzelnen Fasern eine Druckspannung auf das Kunstharz ausgeübt wird.

Aus der WO 84/01413 wird ein Verfahren zur Herstellung von Blattfedern bekannt, wobei einzelne Schichten aus glasfaserverstärktem Kunststoff, in welchem die Fasern unidirektional angeordnet sind, miteinander verklebt werden. Bei diesen Schichten ist der Kunststoff in der Regel nicht ausgehärtet, obwohl dieses Verfahren auch mit ausgehärtetem Kunststoff durchgeführt werden könnte. Bei den einzelnen Lagen wird von den Fasern auf den Kunststoff eine Vorspannung ausgeübt werden, wie sie durch das Wickeln der Glasfasern auftreten kann. Durch eine derartige Vorspannung der einzelnen Fasern wird erreicht, daß der Kunststoff gleichmäßig über den gesamten Querschnitt jeweils im Nahbereich der Fasern einer Druckspannung ausgesetzt wird, wodurch eine höhere Lebensdauer erreichbar ist, da den unterschiedlichen Wärmeausdehnungskoeffizienten von Glas und dem Kunststoff und damit den nach dem Abkühlen der Feder herrschenden Zugbeanspruchungen des Kunststoffes Rechnung getragen wird.

Zur Vereinfachung sowie zur besseren Kontrolle der Eigenschaften bei der Herstellung und damit hoher Reproduzierbarkeit der Federeigenschaften von Blattfedern ist aus der EP-A-0 084 101 bekannt, dünne zumindest teilweise ausgehärtete Platten, zwischen denen jeweils Klebstoffschichten vorgesehen werden, übereinander zu schichten, zu pressen und zum Laminat auszuhärten.

Der Einsatzbereich von Blattfedern, insbesondere Kunststoffedern, welche mit faserverstärktem Kunststoff aufgebaut sind, wird insbesondere durch ökonomische Gründe eingeschränkt. Obwohl in vielen Fällen das technische Eigenschaftsniveau der Blattfeder mit faserverstärktem Kunststoff ein höheres ist als jenes des bisher verwendeten Werkstoffes, wie beispielsweise Stahl. Besteht nun die Möglichkeit, die Beanspruchbarkeit eines Biegeträgers pro Volumenseinheit zu erhöhen, so kann ein größerer Bereich des ökonomischen Einsatzes gewährleistet werden.

Aus Patent Abstracts of Japan, Vol. 3, No. 45 (M56) 17. April 1979, Seite 23 M56 ; & JP-A-54-22048 ist eine faserverstärkte Kunststoffeder bekannt, welche Vorspannungen aufweist und dadurch höher belastet werden kann. Dabei sind ein gebogener Kern und zwei Außenlagen miteinander verbunden, wobei im Kern Biegevorspannungen herrschen und in der oberen Lage Druckspannungen und in der unteren Lage Zugspannungen wirken.

Die Aufgabe der vorliegenden Erfindung besteht nun darin, eine einfach aufgebaute Feder, insbesondere ein Federblatt, zu schaffen, die/das bei gleichen bzw. besseren mechanischen Eigenschaften als eine herkömmliche Feder mit faserverstärktem Kunststoff ein geringeres Gewicht und/oder Volumen aufweist.

Die Aufgabe des erfindungsgemäßen Verfahrens besteht darin, ein besonders einfaches Verfahren zur Herstellung von Federn, insbesondere eines Federblattes zu schaffen, wobei auf besonders einfache Art und Weise Federn auf ihre künftige Beanspruchung konzipiert werden können.

Die erfindungsgemäße Feder, z.B. Parabelfeder, mit zumindest zwei, in Belastungsrichtung gesehen, übereinander angeordneten Schichten mit faserverstärktem, hartelastischem, ausgehärtetem Kunststoff, wobei die Fasern sich zumindest teilweise im wesentlichen über die und in Längsrichtung der Feder erstrecken und die Schichten flächig, insbesondere vollflächig, z.B. über eine Klebstoffschicht miteinander oder als Spannungen aufweisende Außenschichten mit einem Kernteil verbunden sind, besteht im wesentlichen darin, daß· bei unbelasteter Feder zumindest zwei miteinander verbundene Schichten und zwar Kunststoff und Fasern (4, 5, 24, 25, 19, 20) gegeneinander verspannt sind und im Bereich der Verbindungsfläche bzw. der neutralen Ebene Schubspannungen aufweisen, wobei die der Zugseite der Feder bei Betriebsbelastung nähere Schicht auf ihrer Zugseite bei Betriebsbelastung auf Druck, und die der Druckseite der Feder bei Betriebsbelastung nähere Schicht auf ihrer Druckseite bei Betriebsbelastung auf Zug vorgespannt sind.

Durch dieses gegenseitige Verspannen der Schichten tritt nicht nur eine Verspannung gegenüber dem Kunststoff der Feder auf, sondern die Verspannung tritt gegenüber den einzelnen Schichten auf, also somit auch gegenüber den Fasern und weiters kann die Feder dadurch in Gesamtheit höhere Belastungen aufnehmen, da während der Belastung der Feder die eingebrachten Eigenspannungen wirksam werden. Unter Zugseite der Feder soll jene Oberfläche verstanden werden, welche der höchsten Zugbeanspruchung und unter Druckseite der Feder soll jene Oberfläche verstanden sein, welche der höchsten Druckbeanspruchung der Feder bei Betriebsbelastung unterliegen.

Ein besonders einfacher Aufbau der erfindungsgemäßen Feder ergibt sich dann, wenn zwei Schichten vorgesehen sind, die vorzugsweise im wesentlichen gleichen Querschnitt entlang der Federlängsrichtung aufweisen, die idente Entfernungen von der neutralen Ebene aufweisen. Eine derartige Feder, z.B. Parabel- oder Rechteckfeder, weist weiterhin den Vorteil auf, daß nur eine geringere Lagerhalterung der Schichten erforderlich ist, wobei gleichzeitig bei der Fertigung Fertigungsfehler nur schwerer unterlaufen können.

Eine sehr einfache Verspannung kann durch Formschluß der Schichten, insbesondere bei den Federaugen, erreicht werden. Ist eine Klebeschichte im wesentlichen in der neutralen Ebene vorgesehen, so unterliegt diese Klebschichte nur geringeren Beanspruchungen, da sie im wesentlichen keine Längenänderungen ertragen muß und lediglich für die Kraftübermittlung also der Kräfte für die Vorspannung zwischen den Schichten Sorge tragen muß.

Ist zwischen den Schichten zumindest ein kern, insbesondere in Form eines Doppelkeiles, welcher im wesentlichen an seinen beiden Enden in Federlängsrichtung auf Null ausläuft, z.B. Kern für eine Parabelfeder vorgesehen, so kann eine Feder beliebiger Ausgestaltung erreicht werden, wobei gleichzeitig der Anteil von faserverstärktem Kunststoff nicht erhöht werden muß und weiters eine Vorspannung der Schichten gegeneinander durch den Kern weiterhin ermöglicht ist.

Eine besonders vorteilhafte Verspannung ergibt sich auch dann, wenn die Schichten im wesentlichen über die gesamte Breite der Feder erstreckt sind.

Weist die Feder an ihrer Zugseite eine Schicht mit im wesentlichen sich in Federlängsrichtung erstreckenden Fasern auf, die eine höhere maximale ertragbare Dehnung aufweisen als die weiteren Schichten, so kann eine derartige Feder besonders hohen schwellenden Beanspruchungen unterworfen werden, bevor ein Desintegrieren eines Federblattes auftritt.

Ist die Feder zumindest teilweise mit einem mit Kunststoff imprägnierten Vlies, insbesondere ein in Federlängsrichtung orientiertem Vlies, versehen, so ist der Biegeträger auch gegen mechanische Beanspruchung, z.B. Schlag, Steinschlag, unbeabsichtigte Stöße und dgl., besonders gut geschützt.

Das erfindungsgemäße Verfahren zur Herstellung einer Blattfeder, wobei zwei Schichten mit im wesentlichen zumindest teilweise in und über in Federlängserstreckung erstreckenden Fasern und Kunststoff, welche miteinander oder als Außenschichten mit einem Kernteil zur Erstellung einer vorgespannten Feder verbunden werden, insbesondere durch zumindest eine Klebstoffschicht verbunden werden, besteht im wesentlichen darin, daß die gerade Längsachsen aufweisenden Schichten mit hartelastischem bzw. ausge härtetem Kunststoff während des Verbindens mit zumindest einer Kraft unter Deformation, insbesondere Durchbiegung und/ oder Drehung in Federlännsrichtung und/oder Stauchung in Federlängsrichtung bis zum dauerhaften Verbinden dieser Schichten vorgespannt und beaufschlagt werden. formation, insbesondere Durchbiegung und-/oder Dehnung in Federlängsrichtung und/oder Stauchung in Federlängsrichtung bis zum dauerhaften Verbinden dieser Schichten vorgespannt und beaufschlagt wird/werden. Bei dem erfindungsgemäßen Verfahren können beispielsweise eben ausgebildete Schichten, welche an sich am einfachsten zu fertigen sind, z.B. in einer Form oder auch nur mit zwei Auflagern, die an den jeweiligen Enden der Schichten angeordnet sind, in eine erwünschte Form gebracht z.B. gebogen werden, wobei gleichzeitig die gegenseitige Verspannung der Schichten erreichbar ist.

Werden alle Schichten einer Feder, insbesondere einer mit zwei Schichten aufgebauten Feder mit einer Kraft unter Vorspannung gebracht, und die Schichten dann bis zum dauerhaften Verbinden zumindest mit dieser beaufschlagt, so ist eine besonders günstige Verspannung erreicht, da eine Verspannung der Schichten gegeneinander unter optimalem Kraftausgleich erreichbar ist.

Werden die Schichten mit zwei Kräften, und zwar eine schichte unter Dehnung und eine weitere unter Stauchung, jeweils in Federlängsrichtung bis zum dauerhaften Verbinden beaufschlagt, so können mit einer einzigen Vorrichtung unterschiedliche und genau einzuhaltende Vorspannungen eingebracht werden.

Wird die Klebstoffschicht auf zumindest einer der zu verbindenden Flächen der Schichten aufgetragen, worauf die Schichten in eine Presse eingelegt werden und die Presse unter Verspannung und zumindest teilweiser Deformation z.B. Durchbiegung zumindest einer Schicht geschlossen wird, worauf der Klebstoff od. dgl. insbesondere durch Wärmebeaufschlagung, z.B. Mikrowellen erhärtet wird, so kann eine besonders exakt dimensionierte Feder erhalten werden.

Im Folgenden wird die Erfindung anhand der Zeichnungen näher erläutert.

Es zeigen Fig. 1 und 2 zwei heizbare Pressen in schematischer Darstellung und die Fig. 3 bis 5 verschiedene Ausführungsformen von Federn.

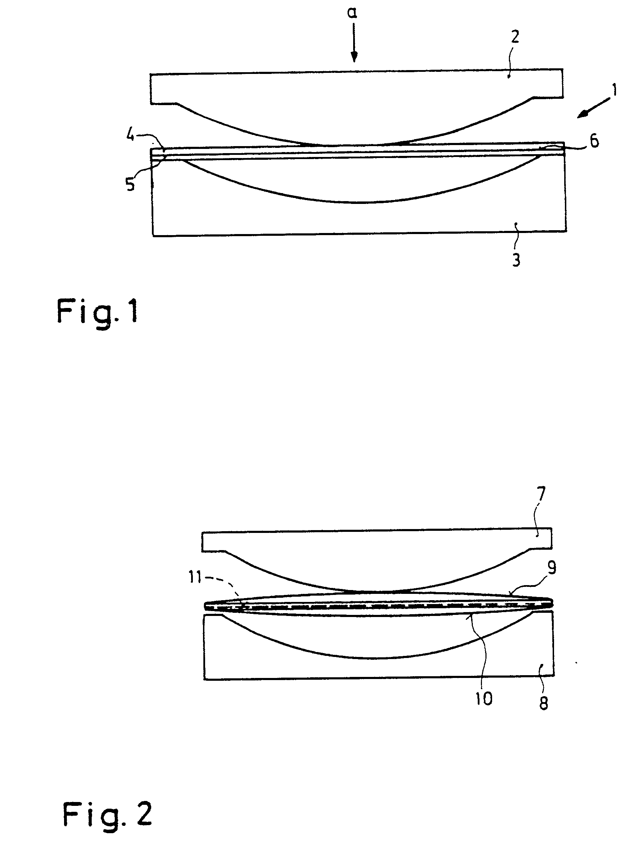

In die in Fig. 1 dargestellte Presse 1 mit einem Oberteil 2 und Unterteil 3 werden zwei Schichten 4, 5, die in Längsrichtung orientierte durchgehende Glasfasern, die in einem duroplastischen Kunststoff, und zwar Epoxidharz, eingebettet sind, eingelegt. Das Harz ist vollkommen ausgehärtet. Die Schichten werden vor Einlage in die Presse auf einer Fläche mit einem Klebstoff und zwar einem Epoxidharzkleber entsprechend dem duroplastischen Kunststoff der Schichten versehen. Sodann werden die Schichten gegeneinander gelegt, wobei darauf geachtet wird, daß keine Lufteinschlüsse in der Klebstoffschichte 6 vorhanden sind. Sodann wird die Presse zugefahren, wodurch die zuerst gerade ausgebildeten Schichten deformiert und zwar gebogen werden, worauf der Kunststoff der Klebstoffschichte beispielsweise durch Hitzeeinwirkung der Presse oder auch durch Hochfrequenzeinwirkung ausgehärtet wird. Nachdem die Klebstoffschichte ausgehärtet ist, wird die nunmehr fertige Feder der Presse entnommen, wobei sich die beiden Schichten gegeneinander verspannen. Die Arbeitsrichtung der Feder ist entgegengesetzt der Schließbewegungsrichtung gemäß Pfeil a gerichtet, sodaß die bei Betriebsbelastung der Feder auf ihrer Zugseite auf Druck und auf ihrer Druckseite auf Zug und zwar in den jeweils der Druckfläche der Feder benachbarten Schichten vorgespannt sind. Es besteht jedoch auch die Möglichkeit eine Schichte zu stauchen und eine weitere zu dehnen, wodurch ebenfalls Zug- bzw. Druckvorspannung erreicht werden kann. Soll eine Parabelfeder erhalten werden, so kann eine Presse gemäß Fig. 2 verwendet werden, die einen Oberteil 7 und einen Unterteil 8 mit parabelförmiger Arbeitsfläche aufweist. In der Presse sind zwei Schichten 9, 10 angeordnet, welche in Federlängsrichtung orientierte Glasfasern aufweisen, welche in einem ausgehärteten Kunststoff eingebettet sind. Die Schichte 11, welche in der Mitte angeordnet ist, ist ein Klebstofffilm. Die Schichten 9 und 10 sind in undeformiertem Zustand gerade ausgebildet und weisen in Federlängsrichtung von der Mitte zum Federende einen abnehmenden Querschnitt auf und liegen mit ihren jeweiligen Enden am Unterteil 8 der Presse an. Wird die Presse nun zugefahren, so unterliegt sowohl die Schicht 9 als auch die Schicht 10 einer Vorspannung durch eine Durchbiegung. Die Presse bleibt so lange geschlossen, bis der Klebstoff vollkommen ausgehärtet ist. Damit wird eine Parabelfeder erhalten, die vorgespannt ist.

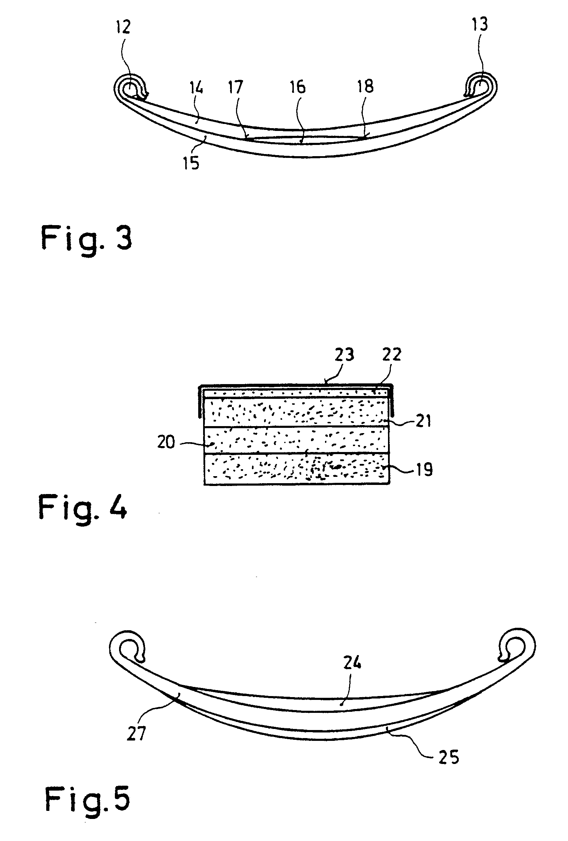

Die in Fig. 3 dargestellte Feder ist eine Parabelfeder, die aus zwei Schichten 14, 15 aufgebaut ist, wobei im Mittelbereich der Parabelfeder ein Doppelkeil 16 vorgesehen ist, der an seinen beiden Enden 17 und 18 auf Null ausläuft. Wie erkennbar, weisen die Schichten 14 und 15 identen Querschnitt auf, wobei sich die Klebeschichte jeweils und zwar im Bereich des Doppelkeiles im gleichen Abstand der neutralen Ebene der Parabelfeder zu liegen kommt, bzw. außerhalb des Bereiches die Klebeschichte als solche in der neutralen Ebene angeordnet ist. Die Parabelfeder weist an ihren beiden Enden idente Augen 12, 13 auf. Bei der Herstellung einer derartigen Feder wird so vorgegangen, daß jeweils zwei gerade planparallele Schichten mit über die gesamte Länge der Feder sich erstreckenden und in Federlängsrichtung orientierten Glasfasern an ihrer Innenseite mit Klebstoff versehen werden, worauf ein Keil mittig positioniert wird, wonach die Presse, z.B. gemäß Fig. 1 zugefahren wird, sodaß der Kunststoff der Klebeschichte ausgehärtet und die Feder, welche nunmehr vorgespannt ist, entnommen werden kann. Dadurch daß ein Doppelkeil vorgesehen wird, kann eine Feder gefertigt werden, die beispielsweise eine Parabelfeder ist, wodurch auf besonders einfache Art und Weise eine an sich schwierig herzustellende Feder mit planparallelen Schichten erhalten werden kann.

Die in Fig. 4 dargestellte Feder im Schnitt weist drei Schichten 19, 20 und 21, die identen Querschnitt besitzen, auf, wobei auf der Zugseite eine weitere Schichte 22 ebenfalls mit in Faserlängsrichtung und über die Federlänge sich erstreckenden Fasern aufweist. Die Schichte 22 weist eine zirka um 10% größere ertragbare Dehnung auf, als die darunterliegenden Schichten. Über diese Schichte ist noch ein längsorientiertes Faservlies 23 angeordnet, das ebenfalls kunststoffimprägniert ist, und über die Kanten der Feder gelegt ist.

Wie aus Fig. 5 ersichtlich, kann auch eine Parabelfeder so erhalten werden, daß sowohl auf der Zugseite als auch auf der Druckseite der Feder Schichten 24, 25, die sich nicht über die gesamte Federlängsrichtung erstrecken, aber ebenfalls unidirektional angeordnete Fasern aufweisen, vorgesehen werden. Diese Schichten 24, 25 werden ebenfalls mit Klebstoff mit der Schicht 27 verbunden, die an ihren beiden Enden jeweils die Federaugen aufweist. Auch eine derartige Feier kann beispielsweise mit einer Presse gemäß Fig. 2 erhalten werden, wobei es von Vorteil sein kann, die beiden Schichten unterschiedlich vorzuspannen.

Die Schichten, die erfindungsgemäß Verwendung finden, können beispielsweise planparallel ausgebildet und bereits vollständig ausgehärtet sein. Gegebenenfalls kann auch eine noch nicht vollkommen ausgehärtete, jedoch bereits hartelastische Schicht verwendet werden, allerdings nur dann, wenn die Schichte so weit ausgehärtet ist, daß eine bleibende Verspannung erhalten wird.

Weiters besteht die Möglichkeit, daß beispielsweise die Schichten gemäß den vorhergehenden Figuren mechanisch gefertigt werden und unter Verspannen miteinander verklebt werden.

Besonders bevorzugt ist es, wenn vor dem Aufbringen einer Klebstoffschichte auf die zu verbindenden Flächen der Schichten dieselben jeweils durch Entfernen eines Abreißgewebes, welches auf den zu verbindenden Flächen aufgebracht ist, vorbereitet werden. Ein solches Abreißgewebe ist ein sehr feines und festes Gewebe mit thermoplastischen Fasern, das für diese Variante des Verfahrens bereits bei der Herstellung der beiden Schichten auf die zu verklebenden Flächen aufgebracht wird. Dabei wird es mit flüssigem Kunststoff durchtränkt und ist nach Härten mit der jeweiligen Schicht fest verbunden. Wird das Gewebe durch einfaches Abreißen entfernt, entsteht eine sehr saubere und fein strukturierte Oberfläche. Diese Vorbereitung der zu verklebenden Flächen bringt eine optimale Festigkeit der Verklebung der vorgespannten Federblattschichten, insbesondere gegenüber den beim Durchbiegen des Federblattes auftretenden Belastungen.

**Ansprüche**

1. Federblatt, z.B. Parabelfeder, mit zumindest zwei, in Belastungsrichtung gesehen, übereinander angeordneten Schichten mit faserverstärktem, hartelastischem, ausgehärtetem Kunststoff, wobei die Fasern sich zumindest teilweise im wesentlichen über die und in Längsrichtung der Feder erstrecken und die Schichten flächig, insbesondere vollflächig, z.B. über eine Klebstoffschicht miteinander oder als Spannungen aufweisende Außenschichten mit einem Kernteil verbunden sind, dadurch gekennzeichnet, daß bei unbelasteter Feder zumindest zwei miteinander verbundene Schichten und zwar Kunststoff und Fasern (4, 5, 24, 25, 19, 20) gegeneinander verspannt sind und im Bereich der Verbindungsfläche bzw. der neutralen Ebene Schubspannungen aufweisen, wobei die der Zugseite der Feder bei Betriebsbelastung nähere Schicht auf ihrer Zugseite bei Betriebsbelastung auf Druck, und die der Druckseite der Feder bei Betriebsbelastung nähere Schicht auf ihrer Druckseite bei Betriebsbelastung auf Zug vorgespannt sind.

2. Feder nach Anspruch 1, dadurch gekennzeichnet, daß die Schichten, z.B. bei den Federaugen durch Formschluß miteinander verbunden sind.

3. Feder nach Anspruch 1 oder 2, dadurch gekennzeichnet, daß zwei Schichten (4, 5, 15) vorgesehen sind, die vorzugsweise im wesentlichen gleichen Querschnitt entlang der Federlängsrichtung aufweisen, die idente Entfernungen von der neutralen Ebene aufweisen.

4. Feder nach Anspruch 1, 2 oder 3, dadurch gekennzeichnet, daß eine Klebeschicht (6) im wesentlichen in der neutralen Ebene der Feder vorgesehen ist.

5. Feder nach einem der Ansprüche 1 bis 4, dadurch gekennzeichnet, daß zwischen den Schichten (14, 15) zumindest ein Kern (16), insbesondere in Form eines Doppelkeiles, welcher im wesentlichen an seinen beiden Enden (17, 18) in Federlängsrichtung auf Null ausläuft, z.B. ein Kern für eine Parabelfeder, vorgesehen ist.

6. Feder nach einem der Ansprüche 1 bis 5, dadurch gekennzeichnet, daß die Schichten im wesentlichen über die gesamte Breite der Feder erstreckt sind.

7. Feder nach einem der Ansprüche 1 bis 6, dadurch gekennzeichnet, daß die Feder an ihrer Zugseite eine Schicht (22) mit im wesentlichen in Federlängsrichtung orientierten Fasern aufweist, welche Schicht eine höhere ertragbare maximale Drehung aufweist als die weiteren Schichten.

8. Feder nach einem der Ansprüche 1 bis 7, dadurch gekennzeichnet, daß die Feder zumindest teilweise mit einem mit Kunststoff imprägnierten Vlies (23), insbesondere in Federlängsrichtung orientiertem Vlies, versehen ist.

9. Verfahren zur Herstellung einer Blattfeder, insbesondere nach einem der Ansprüche 1 bis 8, wobei zwei Schichten mit im wesentlichen zumindest teilweise in und über in Federlängserstreckung erstreckenden Fasern und Kunststoff, welche miteinander oder als Außenschichten mit einem Kernteil zur Erstellung einer vorgespannten Feder verbunden werden, insbesondere durch zumindest eine Klebstoffschicht verbunden werden, dadurch gekennzeichnet, daß die gerade Längsachsen aufweisenden Schichten mit hartelastischem bzw. ausgehärtetem Kunststoff während des Verbindens mit zumindest einer Kraft unter Deformation, insbesondere Durchbiegung und/oder Drehung in Federlängsrichtung und/oder Stauchung in Federlängsrichtung bis zum dauerhaften Verbinden dieser Schichten vorgespannt und beaufschlagt werden.

10. Verfahren nach Anspruch 9, dadurch gekennzeichnet, daß die Schichten mit zwei Kräften, und zwar eine Schicht unter Drehung und eine weitere unter Stauchung jeweils in Federlängserstreckung, bis zum dauerhaften Verbinden zumindest mit diesen beaufschlagt werden.

11. Verfahren nach einem der Ansprüche 9 oder 10, dadurch gekennzeichnet, daß eine Klebstoffschicht auf zumindest eine der zu verbindenden Flächen der Schichten aufgetragen wird, worauf die Schichten in eine Presse eingelegt und die Presse unter Vorspannung und zumindest teilweiser Deformation, z.B. Durchbiegung, zumindest einer Schicht geschlossen wird, worauf der Klebstoff od. dgl., insbesondere durch Wärembeaufschlagung, z.B. Mikrowellen, erhärtet wird.

12. Verfahren nach einem der Ansprüche 9 bis 11, dadurch gekennzeichnet, daß vor dem Aufbringen einer Klebstoffschicht auf die zu verbindenden Flächen der Schichten dieselben jeweils durch Entfernen eines Abreißgewebes, welches auf den zu verbindenden Flächen aufgebracht ist, vorbereitet werden.

## Claims

1. A spring leaf, e.g. a parabolic spring, with at least two layers arranged one on top of the other, viewed in the direction of load, with fibre reinforced, resiliently hard, hardened synthetic material, the fibres substantially extending at least partially over and in the longitudinal direction of the spring, and the layers being connected over the surface area, particularly over the whole surface area, e.g. via an adhesive layer, to each other or to a core part as stressed outer layers, characterised in that when the spring is unloaded, at least two interconnected layers, i.e. synthetic material and fibres (4, 5, 24, 25, 19, 20), are mutually stressed and have shearing stresses in the region of the connecting surface or the neutral plane, the layer closer to the tension side of the spring during operational load being precompressed on its tension side during operational load, and the layer closer to the compression side of the spring during operational load being pretensioned on its compression side during operational load.

2. A spring according to claim 1, characterised in that the layers are interconnected by means of positive locking, e.g. at the spring eyes.

3. A spring according to claim 1 or 2, characterised in that two layers (4, 5, 15) are provided which preferably substantially have the same cross-section along the longitudinal direction of the spring and which are at equal distances from the neutral plane.

4. A spring according to claim 1, 2 or 3, characterised in that an adhesive layer (6) is provided substantially in the neutral plane of the spring.

5. A spring according to any one of claims 1 to 4, characterised in that at least one core (16), particularly in the form of a double wedge which substantially tapers off to nothing at both its ends (17, 18) in the longitudinal direction of the spring, e.g. a core for a parabolic spring, is provided between the layers (14, 15).

6. A spring according to any one of claims 1 to 5, characterised in that the layers substantially extend over the whole width of the spring.

7. A spring according to any one of claims 1 to 6, characterised in that the spring has on its tension side a layer (22) with fibres substantially orientated in the longitudinal direction of the spring, which layer has a higher tolerable maximum torsion than the further layers.

8. A spring according to any one of claims 1 to 7, characterised in that the spring is provided at least partially with a fleece (23) impregnated with synthetic material, particularly a fleece orientated in the longitudinal direction of the spring.

9. A method of manufacturing a leaf spring, particularly according to any one of claims 1 to 8, wherein two layers with synthetic material and fibres which substantially extend at least partially in and over the longitudinal direction of the spring, which layers are connected to each other or to a core part as outer layers for constructing a prestressed spring, are connected particularly by means of at least one adhesive layer, characterised in that those layers having longitudinal axes and with resiliently hard or hardened synthetic material are prestressed and acted upon during connection by at least one force during deformation, particularly flexion and/or torsion in the longitudinal direction of the spring and/or compression in the longitudinal direction of the spring until these layers are permanently connected.

10. A method according to claim 9, characterised in that the layers are acted upon by two forces, i.e. one layer under torsion and a further layer under compression, each in the longitudinal direction of the spring, until there is permanent connection at least between the latter.

11. A method according to either one of claims 9 or 10, characterised in that an adhesive layer is applied to at least one of the layer surfaces to be connected, whereupon the layers are laid in a press and the press is closed during prestressing and at least partial deformation, e.g. flexion, of at least one layer, whereupon the adhesive layer or the like is hardened, particularly by heat action, e.g. microwaves.

12. A method according to any one of claims 9 to 11, characterised in that before an adhesive layer is applied to the layer surfaces to be connected, the said layers are each prepared by removing a tear-off fabric which is applied to the surfaces to be connected.

## Revendications

1. Lame de ressort, ressort parabolique par exemple, comportant, vu dans le sens de charge, au minimum deux couches placées l'une au-dessus de l'autre, en matière synthétique cuite, renforcée par fibres, à élasticité ferme, les fibres s'étendant pour l'essentiel, partiellement au moins, sur et dans la direction longitudinale du ressort et les couches étant assemblées entre elles à plat, de préférence sur toute leur surface, au moyen par exemple d'une couche de colle ou, en tant que couches externes présentant des tensions, étant assemblées avec un noyau central, caractérisée en ce que, le ressort n'étant pas chargé, au moins deux couches assemblées entre elles, à savoir matière synthétique et fibres, (4, 5, 24, 25, 19, 20) sont gauchies l'une contre l'autre et présentent dans la zone de leur surface d'assemblage ou du plan neutre des contraintes tangentielles, tandis que lors de l'emploi en charge, la couche la plus proche de la face de traction du ressort est précontrainte en pression sur sa face de traction et vice versa.

2. Ressort selon la revendication 1, caractérisé en ce que les couches sont assemblées entre elles, aux yeux du ressort, par fermeture géométrique.

3. Ressort selon les revendications 1 ou 2, caractérisé en ce que deux couches (4, 5, 15) sont prévues, qui présentent de préférence une section transversale substantiellement la même le long de la direction longitudinale du ressort et qui présentent un même écartement par rapport au plan neutre.

4. Ressort selon la revendication 1, 2 ou 3, caractérisé en ce qu'une couche de colle (6) est prévue dans le plan neutre du ressort pour l'essentiel.

5. Ressort selon l'une des revendications 1 à 4, caractérisé en ce qu'entre les couches (14, 15), il est prévu au moins un noyau (16), noyau pour ressort parabolique par exemple, sous forme d'un double coin notamment, qui à ses deux extrémités (17, 18) se termine en direction longitudinale du ressort.

6. Ressort selon l'une des revendications 1 à 5, caractérisé en ce que les couches s'étendent substantiellement sur toute la largeur du ressort.

7. Ressort selon l'une des revendications 1 à 6, caractérisé en ce que le ressort présente sur sa face de traction une couche (22) comportant des fibres orientées pour l'essentiel dans la direction longitudinale du ressort, laquelle couche présente une torsion maximale tolérable supérieure à celle des autres couches.

8. Ressort selon l'une des revendications 1 à 7, caractérisé en ce qu'il est, partiellement au moins, pourvu d'une nappe (23) imprégnée de matière synthétique, nappe orientée notamment dans la direction longitudinale du ressort.

9. Procédé pour la fabrication d'un ressort a lame conforme en particulier à l'une des revendications 1 à 8, tandis que deux couches en matière synthétique et en fibres s'étendant, partiellement au moins, substantiellement dans et sur la portée longitudinale du ressort sont assemblées entre elles ou, en tant que couches externes, sont assemblées avec un noyau central pour la réalisation d'un ressort précontraint et ce notamment au moyen d'une couche au moins de colle, caractérisé en ce que les couches présentant des axes longitudinaux droits, couches en matière synthétique cuite, à élasticité ferme, sont précontraintes et chargées lors de l'assemblage par au minimum une force provoquant déformation, notamment flexion et/ou torsion dans le sens longitudinal du ressort et/ou écrasement dans le sens longitudinal du ressort et ce jusqu'à assemblage définitif de ces couches.

10. Procédé selon la revendication 9, caractérisé en ce que les couches soumises à deux forces, à savoir une couche soumise à torsion et une autre soumise à écrasement, chacune dans la portée longitudinale du ressort, sont chargées par ces forces au minimum jusqu'à l'assemblage définitif.

11. Procédé selon l'une des revendications 9 ou 10, caractérisé en ce qu'une couche de colle est étalée sur au minimum l'une des faces des couches à asembler, après quoi, les couches sont introduites dans une presse, laquelle est refermée avec précontrainte et partiellement au moins déformation, flexion notamment, d'une couche au moins, puis, la colle ou analogue est durcie par traitement thermique notamment, par micro-ondes par exemple.

12. Procédé selon l'une des revendications 9 à 11, caractérisé en ce qu'avant la mise en place d'une couche de colle sur les surfaces des couches a assembler, celles-ci sont préparées en arrachant un tissu adhérent, lequel est disposé sur les surfaces à assembler.

Fig. 1

Fig. 2

Fig. 3

Fig. 4

Fig. 5